# FASCICULE DE BREVET EUROPEEN

(11) **EP 3 670 928 B1**
(45) Date de publication et mention de la délivrance du brevet: **17.08.2022**
(21) Numéro de dépôt: 19216526.4
(22) Date de dépôt: 16.12.2019
(51) Int. Cl.: F04D 29/54, F01D 5/14, F01D 9/04

(54) **ÉTAGE STATORIQUE D'UN COMPRESSEUR D'UNE TURBOMACHINE D'AÉRONEF**
STATORSTUFE EINES VERDICHTERS EINES LUFTFAHRZEUG-TURBOTRIEBWERKS
STATOR STAGE OF A COMPRESSOR OF AN AIRCRAFT TURBINE ENGINE

(30) Priorité: 18.12.2018 BE 201805897
(43) Date de publication de la demande: 24.06.2020
(73) Titulaire: Safran Aero Boosters, 4041 Herstal (BE)
(72) Inventeur: HIERNAUX, Stéphane, 4041 Herstal (BE)
(74) Mandataire: Gevers Patents

(56) Documents cités:
- EP-A1- 2 431 571
- EP-A1- 3 372 785
- EP-B1- 2 799 721

## Description

### Domaine technique

La présente invention concerne un étage statorique d'un compresseur d'une turbomachine d'aéronef.

### Art antérieur

Une turbomachine d'aéronef comprend généralement au moins un compresseur muni d'une pluralité d'étages alignés le long d'un axe moteur, chaque étage étant constitué d'un anneau d'aubes qui sont mobiles dans le cas d'un étage dit « rotorique », ou statiques et munies d'une fonction de redresseur dans le cas d'un étage dit « statorique ». Les étages rotoriques et statoriques sont souvent alternés. Des paramètres techniques tels que les dimensions des aubes sont déterminés pour adapter les conditions de fonctionnement de chaque étage à celles des étages en amont et en aval.

En fonctionnement, un flux d'air s'écoule entre les étages du compresseur. Ce flux d'air interagit avec des aubes d'étages statoriques, ce qui crée des phénomènes secondaires d'écoulement aux voisinages des parois des étages. Ces phénomènes secondaires sont généralement tridimensionnels et non alignés avec la direction générale de l'écoulement du flux d'air dans le compresseur. En particulier, ils sont sources de pertes et d'instabilités au sein du compresseur.

Afin de limiter ces phénomènes secondaires, il est connu, par exemple de EP2799721B1, d'utiliser des étages statoriques munis à la fois d'aubes principales et d'aubes auxiliaires plus petites, chacune de ces dernières étant associée à une des aubes principales en s'étendant le long et davantage en aval d'une face de pression de l'aube principale associée. Le positionnement et l'intégration des aubes auxiliaires au sein d'un étage statorique sont néanmoins complexes à mettre en place dans ce contexte.

Par ailleurs, le document EP3372785A1 divulgue également de telles aubes auxiliaires dans le contexte technique distinct d'une turbine de turbomachine d'aéronef. Le document EP2431571A1 a, quant à lui, trait au scellage d'une aube sur un support en matériau composite.

### Résumé de l'invention

Un objet de la présente invention est de proposer un étage statorique d'un compresseur d'une turbomachine d'aéronef permettant de limiter les phénomènes secondaires d'écoulement de flux d'air, qui soit plus simple à concevoir dans ce contexte.

À cet effet, la présente invention propose un étage statorique d'un compresseur d'une turbomachine d'aéronef comprenant :
- une virole intérieure annulaire comprenant au moins un segment constitué d'un matériau composite ;
- une virole extérieure annulaire entourant la virole intérieure ;
- une pluralité d'aubes statoriques s'étendant radialement de la virole intérieure à la virole extérieure, chacune comprenant une face de pression pour dévier un flux d'air ;
- au moins une aube auxiliaire disposée à une distance plus petite d'une première des aubes statoriques que des autres aubes statoriques, comprenant une face de pression d'une aire plus petite qu'une aire de la face de pression de la première aube statorique ;
   caractérisé en ce que la au moins une aube auxiliaire :
   - comprend un pied noyé au moins partiellement dans le matériau composite ; et
   - s'étend radialement, à partir du pied, parallèlement à et totalement entre la première aube statorique et une deuxième des aubes statoriques.

L'étage statorique selon la présente invention permet de limiter les phénomènes secondaires d'écoulement de flux d'air et est simple à concevoir dans ce contexte. Le positionnement et l'intégration de la au moins une aube auxiliaire au sein de l'étage statorique sont simples à mettre en place, dans le cadre des tolérances strictes de fabrication et d'utilisation du compresseur.

D'une part, la au moins une aube auxiliaire ne doit pas être spécifiquement positionnée en aval d'une aube statorique à laquelle elle est associée. La au moins une aube auxiliaire s'étend en effet simplement radialement, à partir de son pied, parallèlement à et entre les première et deuxième aubes statoriques, celles-ci étant préférentiellement consécutives de façon circonférentielle sur le segment de la virole intérieure. En outre, les aubes statoriques peuvent occuper toute une longueur d'amont en aval du segment, sans prévoir des emplacements latéraux particulier en aval pour la au moins une aube auxiliaire.

Cet agencement de la au moins une aube auxiliaire totalement entre les première et deuxième aubes statoriques, et parallèlement à celles-ci, permet d'obtenir l'effet technique de limitation des phénomènes secondaires susdits lorsque l'étage statorique est en fonctionnement dans un compresseur d'une turbomachine. En effet, elle permet une déviation au moins partielle d'un flux d'air au sein du compresseur sur une face de dépression de la première aube statorique, créant au moins localement une dépression. Il s'ensuit une limitation au moins locale des phénomènes secondaires et une amélioration indirecte du redressement du flux d'air au sein du compresseur. De plus, en tant qu'aube de l'étage statorique, au même titre que les aubes statoriques, la au moins une aube auxiliaire contribue directement à un redressement du flux d'air.

D'autre part, la au moins une aube auxiliaire comprend un pied au moins partiellement noyé dans le matériau composite, ce qui permet son intégration simple, efficace et particulièrement solide au sein de la virole intérieure. En particulier, cette intégration de la au moins une aube auxiliaire se distingue avantageusement de l'art antérieur de part le fait qu'elle forme une seule pièce avec segment fabriqué, contrairement aux aubes de l'étage statorique connues qui sont généralement agencées séparément dans des ajours de la virole intérieure.

Un avantage de l'invention est de permettre une réduction du nombre d'aubes statoriques nécessaires pour l'étage statorique car un espace plus grand peut être laissé entre deux telles aubes consécutives de façon circonférentielle. Ainsi, l'étage statorique est moins couteux à fabriquer. Il est en outre plus léger, ce qui est avantageux dans le cas des applications aéronautiques auquel il est destiné. De plus, le rendement global du compresseur comprenant l'étage statorique est amélioré.

Avantageusement, l'étage statorique selon l'invention permet une bonne limitation des phénomènes secondaires d'écoulement tout en ne nécessitant la présence d'au moins une aube auxiliaire que sur la virole intérieure. Au moins une aube auxiliaire positionnée et intégrée de façon analogue au sein de la virole extérieure ne se départirait toutefois pas du cadre de l'invention.

Dans le cadre de ce document, les viroles sont d'une forme principalement annulaire, entourant un axe fictif d'empilement des étages du compresseur, dirigé d'amont en aval. Les adjectifs « intérieur » et « extérieur » faisant respectivement référence à un premier élément par rapport à un deuxième élément, caractérisent de préférence un premier élément situé plus proche de cet axe fictif que le deuxième élément. Par exemple, la virole intérieure entoure l'axe fictif à une distance plus petite que la virole extérieure, qui elle-même entoure la virole intérieure. Le terme « axial » et ses dérivés font de préférence référence à ce qui est selon une direction parallèle à l'axe fictif. Par exemple, les aubes de l'étage statorique sont préférentiellement allongées essentiellement axialement. Le terme « radial » et ses dérivés font de préférence référence à ce qui est selon une direction perpendiculaire à l'axe fictif. Par exemple, les aubes de l'étage statorique s'étendent préférentiellement principalement de façon radiale de la virole intérieure à la virole extérieure. Le terme « circonférentiel » et ses dérivés font préférentiellement référence à ce qui à trait à une direction circulaire, tangentiellement perpendiculaire à une direction radiale. Par exemple, les aubes de l'étages statoriques sont préférentiellement alignées principalement de façon circonférentielle sur la virole intérieure.

L'usage, dans le présent document, du verbe « comprendre » de ses variantes, ainsi que ses conjugaisons, ne peut en aucune façon exclure la présence d'éléments autres que ceux mentionnés. L'usage, dans le présent document, de l'article indéfini « un », « une », ou de l'article défini « le », « la » ou « l' », pour introduire un élément n'exclut pas la présence d'une pluralité de ces éléments.

Le terme « entre » (utilisé pour décrire l'agencement de la au moins une aube auxiliaire entre deux aubes statoriques) doit être considéré selon une direction qui est tangente à la face de pression de la première et de la deuxième aubes statoriques. Préférentiellement, un arc de cercle s'étendant de façon circonférentielle entre les première et deuxième aubes statoriques intersecte nécessairement la au moins une aube auxiliaire.

Selon un mode de réalisation préféré de l'invention, une section transverse de la au moins une aube auxiliaire présente un profil en forme de « L ». Un tel profil est avantageusement à la fois simple à concevoir, à positionner et à intégrer au sein de la virole intérieure de l'étage statorique. Cette section transverse du pied présente, de préférence, également un profil en forme de « L ».

Selon un mode de réalisation préféré de l'invention, le pied comprend deux portions sécantes sensiblement planes comprenant :
- une première portion traversant radialement la virole intérieure, et
- une deuxième portion s'appuyant sur une surface intérieure de la virole intérieure.

Avantageusement, une bonne stabilité et une intégration simple et solide de la au moins une aube auxiliaire sont ainsi obtenues. En particulier, la au moins une aube auxiliaire peut être insérée facilement lors un moulage du matériau composite pour fabriquer le segment de la virole intérieure. Les première et deuxième portions sont optionnellement perpendiculaires.

Selon un mode de réalisation préféré de l'invention, la au moins une aube auxiliaire comprend une lame métallique. Cette lame métallique rend la au moins une aube auxiliaire particulièrement solide. Elle est de préférence prolongée par le pied. Ce dernier est préférentiellement de section transverse en forme de « L » dont une branche prolonge la lame métallique. Ainsi, la solidité de l'aube auxiliaire est couplée à sa bonne et solide intégration au sein de la virole intérieure.

La au moins une aube auxiliaire est de préférence constituée d'au moins un matériau parmi du métal ou une matière composite. Plus préférentiellement, la au moins une aube auxiliaire est métallique. La au moins une aube auxiliaire est optionnellement constituée d'une pluralité de matériaux.

Selon un mode de réalisation préféré de l'invention, la au moins une aube auxiliaire présente un profil aérodynamique. De préférence, elle est composé d'un empilage de profils aérodynamique. De cette façon les effets de redressement direct d'un écoulement d'un flux d'air au sein du compresseur sont améliorés.

Selon un mode de réalisation très préféré de l'invention, l'étage statorique comprend une pluralité d'aubes auxiliaires comprenant la au moins une aube auxiliaire,
chacune des aubes auxiliaires comprenant un pied noyé au moins partiellement dans le matériau composite, et s'étendant radialement, à partir de ce pied, essentiellement parallèlement entre deux des aubes statoriques.

Ainsi, il est clair que les effets techniques de redressement d'un flux d'air au sein du compresseur sont améliorés vu que l'étage statorique comprend une pluralité d'aubes auxiliaires, préférentiellement réparties de façon harmonieuse et/ou symétrique sur une circonférence de la virole intérieure. En particulier, de préférence, cette circonférence présente une alternance d'une des aubes statoriques avec une des aubes auxiliaires.

Les modes de réalisations préférés de la au moins une aube qui ont été présenté ci-dessus se transposent mutatis mutandis à une sélection arbitraire des la pluralité d'aubes auxiliaires susdites. Il en va de même pour les différents avantages qui y sont associés. De préférence, cette sélection arbitraire consiste en toutes les aubes auxiliaires susdites. En conséquence, chacune des aubes auxiliaires s'étend de préférence totalement entre deux des aubes statoriques, parallèlement à celles-ci.

En particulier, préférentiellement, les aubes statoriques sont de dimensions et de profils semblables, et de façon semblable, les aubes auxiliaires sont de dimensions et de profils semblables, chacune ayant une section transverse présentant un profil en forme de « L ». Chacune des aubes auxiliaires est de dimensions plus petites que chacune des aubes statoriques.

Chacune des aubes auxiliaires est associée de préférence à une des aubes statoriques s'étendant le long d'une face de pression de ladite chacune desdites aubes auxiliaires, à une distance comprise entre 20% et 35% d'une distance entre les deux aubes statoriques. De cette façon, l'effet de déviation susdit du flux d'air est orienté spécifiquement par rapport à une aube statorique à laquelle une aube auxiliaire est associée. Cette distance optimise l'effet de redressement indirect local du flux d'air au voisinage de l'aube auxiliaire.

D'autres mesures permettent d'optimiser les effets techniques des aubes auxiliaires du mode de réalisation très préféré. Par exemple, et préférentiellement, pour un étage statorique muni d'aubes statoriques de dimensions et de profils semblables, et d'aubes auxiliaires de dimensions et de profils semblables :
- une hauteur de chacune des aubes auxiliaires, mesurée de façon radiale, est comprise entre 5% et 40%, de préférence entre 15% et 25%, d'une hauteur de chacune des aubes statoriques, mesurée de façon radiale ; et/ou
- une longueur de chacune des aubes auxiliaires, mesurée de façon essentiellement axiale sur une surface extérieure de la virole intérieure, est comprise entre 5% et 60%, de préférence entre 20% et 40%, d'une longueur de chacune des aubes statoriques, mesurée de façon essentiellement axiale sur cette surface extérieure de la virole intérieure.

Selon un mode de réalisation non revendiqué, un écart, mesuré de façon axiale sur une surface extérieure de virole intérieure, entre un bord en amont de la virole intérieure et un bord d'attaque de la chacune des aubes auxiliaires est compris entre 50% et 250% d'un écart, mesuré de façon axiale sur une surface extérieure de la virole intérieure entre le bord amont et un bord d'attaque d'une des aubes statoriques. Dans ce contexte, lesdits bords d'attaques sont préférentiellement des bords s'entendant radialement en amont. Préférentiellement, cette une des aubes statoriques consiste en l'aube statorique associée à la chacune des aubes auxiliaires au sens susdit, c'est-à-dire qu'elle s'étend le long d'une face de pression de la chacune des aubes auxiliaires, à une distance comprise entre 20% et 35% d'une distance entre les deux aubes statoriques.

Optionnellement, la virole intérieure de l'étage statorique selon l'invention est constituée de plusieurs segments constitués du matériau composite, et comprenant le au moins un segment. Une virole intérieure d'un seul tenant qui comprendrait d'autres matériaux tels qu'un métal ne se départirait toutefois pas du cadre de l'invention.

La présente invention propose aussi un compresseur d'une turbomachine d'aéronef comprenant un étage statorique selon l'invention. L'invention propose en outre une turbomachine d'aéronef comprenant un tel compresseur selon l'invention.

Les modes de réalisation préférés ainsi que les avantages de l'étage statorique selon l'invention se transposent mutatis mutandis au compresseur et à la turbomachine d'aéronef selon l'invention.

Le compresseur selon l'invention est de façon préférée un compresseur basse pression. Un compresseur haute pression muni de l'étage statorique selon la présente invention ne se départirait toutefois pas du cadre de l'invention.

L'invention propose également une méthode de fabrication d'un étage statorique selon l'invention comprenant les étapes suivantes :
- fabriquer la au moins une aube auxiliaire ;
- fabriquer le au moins un segment à partir du matériau composite en noyant au moins partiellement le pied dans le matériau composite.

Les modes de réalisations préférés et avantages du au moins un segment ainsi obtenu intégrant la au moins une aube auxiliaire se transposent à la présente méthode de fabrication selon l'invention. En particulier, l'étape de fabrication du au moins un segment comprend de préférence une sous-étape de moulage du matériau composite formant le au moins un segment, combiné avec une sous-étape d'intégration de la au moins une aube auxiliaire durant le moulage. Plus préférentiellement, le moulage et l'intégration comprend une traversée du pied de la au moins une aube auxiliaire de part en part de l'épaisseur de matériau composite, et/ou une répartition du matériau composite autour de ce pied, de sorte qu'une première portion du pied soit immergée et emprisonnée dans le matériau composite et une deuxième portion s'appuyant sur une surface intérieure du segment, à l'opposée d'une surface extérieure du segment à partir de laquelle s'étend radialement le reste de la au moins une aube auxiliaire.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 illustre une vue schématique tridimensionnelle d'une partie d'un étage statorique d'un compresseur d'une turbomachine d'aéronef selon un mode de réalisation préféré de l'invention ;
- la figure 2 illustre une coupe de la partie de l'étage statorique représenté en figure 1.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

Dans cette description détaillées, la présente invention est décrite avec des réalisations particulières et des références à des figures mais l'invention n'est pas limitée par celles-ci. Les dessins ou figures décrits ne sont que schématiques et ne sont pas limitants.

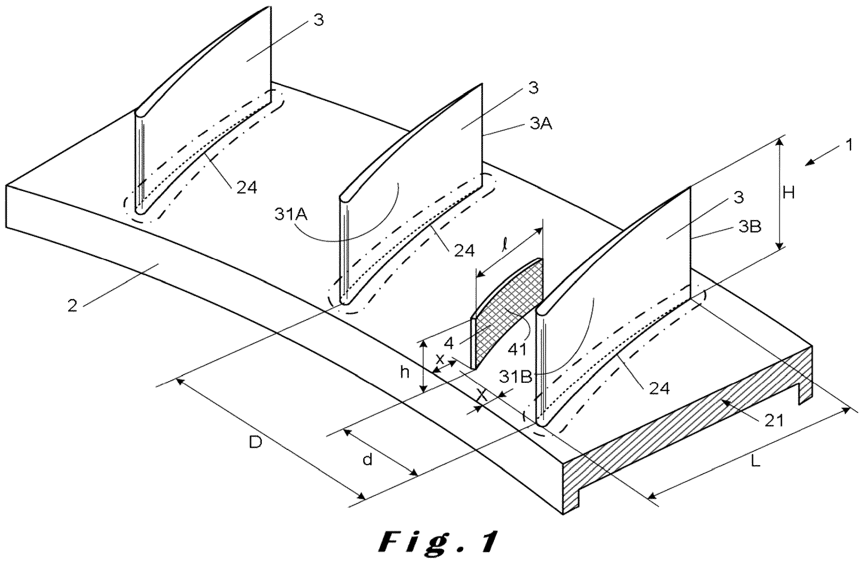

En particulier, les références indiquées sous forme de lettres telles que d, D, h, H, I, L, x et X en figure 1 correspondent à des mesures de longueurs pour faciliter une visualisation de certaines caractéristiques de l'invention et ne correspondent pas à des objets matériels concrets.

La figure 1 représente une partie d'un étage statorique 1 d'un compresseur d'une turbomachine d'aéronef selon un mode de réalisation préféré de l'invention. Cette partie comprend un segment 21 en matériau composite d'une virole intérieure 2 et des aubes statoriques 3 s'étendant radialement du segment 21 vers une virole extérieure non représentée. Des ajours 24 de passage des aubes statoriques 3 sont prévus dans le segment 21. La partie comprend aussi une aube auxiliaire 4 s'étendant radialement, parallèlement à et totalement entre deux des aubes statoriques 3A et 3B placées consécutivement de façon circonférentielle sur la virole intérieure 2. Cette aube auxiliaire 4 9- étant agencée pour contrôler au moins localement l'écoulement d'un flux d'air au sein du compresseur et ainsi limiter des pertes et des instabilités au sein de celuici. L'aube statorique 3B est associée à l'aube auxiliaire 4 en ce qu'elle s'étend radialement à proximité et le long d'une face de pression 41 de l'aube auxiliaire 4, à une distance d comprise entre 20% et 35% d'une distance D entre les aubes statoriques 3A et 3B.

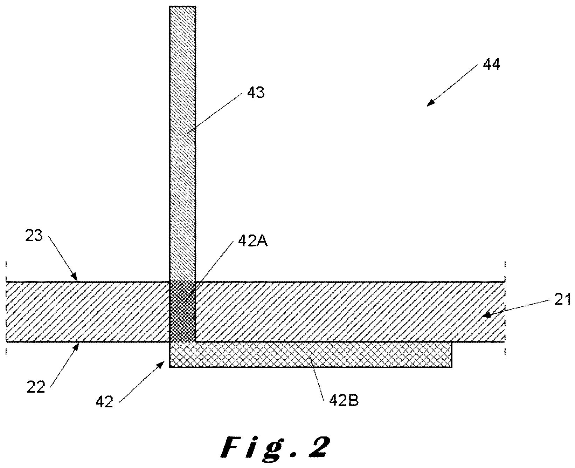

Les aubes statoriques ont sensiblement des dimensions et un profil semblables. L'aube auxiliaire est auxiliaire en ce que les dimensions de l'aube auxiliaire 4 sont strictement plus petites que les dimensions des aubes statoriques 3. En particulier, la face de pression 41 est d'une aire plus petite qu'un quart d'une aire d'une face de pression 31A, 31B de chacune des deux aubes statoriques 3A et 3B respectivement. De façon préférée, une hauteur h de l'aube auxiliaire 4, mesurée radialement, est comprise entre 5% et 40% d'une hauteur H des aubes statoriques 3, mesurée radialement, et une longueur I de l'aube auxiliaire, mesurée de façon essentiellement axiale sur une surface extérieure de la virole intérieure 2, est comprise entre 5% et 60% d'une longueur L des aubes statoriques 3, mesurée de façon essentiellement axiale sur cette surface extérieure. Cette dernière est référencée par le numéro 23 en figure 2. Z Selon un mode de réalisation non revendiqué, un écart x, mesuré de façon axiale sur une surface extérieure 23 de la virole intérieure 2, entre un bord en amont de la virole intérieure 2 et un bord d'attaque de l'aube auxiliaire 4 est compris entre 50% et 250% d'un écart X, mesuré de façon axiale sur une surface extérieure 23 de la virole intérieure 2, entre ce bord amont et un bord d'attaque de l'aube statorique 3B associée.

Tel qu'il est illustré en figure 2, une section transverse 44 de l'aube auxiliaire 4 présente un profil en forme de « L ». L'aube auxiliaire 4 comprend un pied 42 partiellement noyé dans le matériau composite, et une ailette 43 présentant un empilage de profils aérodynamiques, et de préférence constituée d'une lame métallique. Elle constitue une portion extérieure visible de l'aube auxiliaire s'étendant radialement parallèlement à l'aube statorique 3B, à partir du pied 42. La section transverse du pied 42 présente un profil en forme de « L ». En particulier, le pied 42 comprend deux portions essentiellement planes et perpendiculaires : une première portion 42A qui traverse radialement le segment 21 de la virole intérieure 2, et une deuxième portion 42B qui s'appuie sur une surface intérieure 22 de la virole intérieure 2. La section transverse 44 de ces deux portions 42A et 42B définissent ledit profil en forme de « L ». La portion 42A est complètement noyée dans le matériau composite composant le segment 21. Cette réalisation est possible grâce à une avantageuse méthode de fabrication de l'étage statorique 1 comprenant, après une fabrication de l'aube auxiliaire 4, une fabrication du segment 21 à partir du matériau composite en noyant la portion 42A dans ledit matériau composite. Plus précisément, le matériau composite est déposé et/ou moulé au dessus de la portion 42B, de façon à emprisonner la portion 42A complètement dans le matériau composite, sans recouvrir l'ailette 43.

De façon générale, la présente invention n'est pas limitée à la description susmentionné. En particulier, la virole intérieure 2 est de préférence constituée d'une pluralité de segments assemblés constitués du matériau composite, et/ou l'étage statorique 1 comprend de préférence une pluralité d'aubes auxiliaires, chacune comprenant un pied noyé au moins partiellement dans le matériau composite, et s'étendant radialement à partir de ce pied, essentiellement parallèlement entre deux des aubes statoriques 3, de préférence consécutive de façon circonférentielle sur la virole intérieure 2. Un agencement et une forme de chacune des aubes auxiliaires correspond de préférence à un agencement et une forme de l'aube auxiliaire 4 explicités dans la présente description détaillée.

En bref, la présente invention concerne un étage statorique 1 d'un compresseur d'une turbomachine d'aéronef. L'étage statorique 1 comprend une virole intérieure 2 comprenant au moins un segment 21 constitué d'un matériau composite, une virole extérieure, des aubes statoriques 3 s'étendant radialement de la virole intérieure 2 à la virole extérieure, et au moins une aube auxiliaire 4 comprenant un pied 42 noyé au moins partiellement dans ledit matériau composite, et s'étendant radialement, à partir de ce pied 42, parallèlement à et entre deux des aubes statoriques 3.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limités aux exemples illustrés et/ou décrits ci-dessus. La portée de l'invention est définie par les revendications annexées.

## Revendications

1. Etage statorique (1) d'un compresseur d'une turbomachine d'aéronef comprenant :
- une virole intérieure (2) annulaire comprenant au moins un segment (21) constitué d'un matériau composite ;
- une virole extérieure annulaire entourant ladite virole intérieure (2) ;
- une pluralité d'aubes statoriques (3) s'étendant radialement de ladite virole intérieure (2) à ladite virole extérieure, chacune comprenant une face de pression pour dévier un flux d'air ;
- au moins une aube auxiliaire (4) disposée à une distance plus petite d'une première (3B) desdites aubes statoriques (3) que des autres aubes statoriques (3), comprenant une face de pression (41) d'une aire plus petite qu'une aire de la face de pression (31B) de ladite première aube statorique (3B) ;
**caractérisé en ce que** ladite au moins une aube auxiliaire (4) :
- comprend un pied (42) noyé au moins partiellement dans ledit matériau composite ; et
- s'étend radialement, à partir dudit pied (42), parallèlement à et totalement entre ladite première aube statorique (3B) et une deuxième (3A) desdites aubes statoriques (3).

2. Etage statorique (1) selon la revendication précédente, **caractérisé en ce qu'**une section transverse (44) de ladite au moins une aube auxiliaire (4) présente un profil en forme de « L ».

3. Etage statorique (1) selon la revendication précédente, **caractérisé en ce que** ladite section transverse (44) dudit pied (42) présente un profil en forme de « L ».

4. Etage statorique (1) selon l'une quelconque des revendications précédentes, **caractérisé en ce que** ledit pied (42) comprend deux portions sécantes sensiblement planes comprenant une première portion (42A) traversant radialement ladite virole intérieure (2), et une deuxième portion (42B) s'appuyant sur une surface intérieure (22) de ladite virole intérieure (2).

5. Etage statorique (1) selon l'une quelconque des revendications précédentes, **caractérisé en ce que** ladite au moins une aube auxiliaire (4) comprend une lame métallique.

6. Etage statorique (1) selon l'une quelconque des revendications précédentes, **caractérisé en ce que** ladite au moins une aube auxiliaire (4) présente un profil aérodynamique.

7. Etage statorique (1) selon l'une quelconque des revendications précédentes, **caractérisé en ce que** l'étage statorique (1) comprend une pluralité d'aubes auxiliaires dont ladite au moins une aube auxiliaire (4),
chacune desdites aubes auxiliaires comprenant un pied noyé au moins partiellement dans ledit matériau composite, et s'étendant radialement, à partir de ce pied, essentiellement parallèlement entre deux desdites aubes statoriques (3).

8. Etage statorique (1) selon la revendication précédente, **caractérisé en ce que** ladite chacune desdites aubes auxiliaires est associée à une desdites aubes statoriques s'étendant le long d'une face de pression de ladite chacune desdites aubes auxiliaires, à une distance (d) comprise entre 20% et 35% d'une distance (D) entre lesdites deux aubes statoriques.

9. Etage statorique (1) selon l'une quelconque des deux revendications précédentes, **caractérisé en ce que** lesdites aubes statoriques (3) sont de dimensions et de profils semblables, et **en ce que** lesdites aubes auxiliaires sont de dimensions et de profils semblables, et ont une section transverse présentant un profil en forme de « L ».

10. Etage statorique (1) selon la revendication précédente, **caractérisé en ce qu'**une hauteur (h) de ladite chacune desdites aubes auxiliaires, mesurée radialement, est comprise entre 5% et 40% d'une hauteur (H) de chacune desdites aubes statoriques (3), mesurée radialement.

11. Etage statorique (1) selon l'une quelconque des deux revendications précédentes, **caractérisé en ce qu'**une longueur (l) de ladite chacune desdites aubes auxiliaires, mesurée de façon essentiellement axiale sur une surface extérieure (23) de ladite virole intérieure (2), est comprise entre 5% et 60% d'une longueur (L) de chacune desdites aubes statoriques (3), mesurée de façon essentiellement axiale sur ladite surface extérieure (23) de ladite virole intérieure (2).

12. Compresseur d'une turbomachine d'aéronef comprenant un étage statorique (1) selon l'une quelconque des revendications précédentes.

13. Turbomachine d'aéronef comprenant un compresseur selon la revendication précédente.

14. Méthode de fabrication d'un étage statorique selon l'une quelconque des revendications 1 à 11, comprenant les étapes suivantes :
- fabriquer ladite au moins une aube auxiliaire (4) ;
- fabriquer ledit au moins un segment (21) à partir dudit matériau composite en noyant au moins partiellement ledit pied (42) dans ledit matériau composite.

## Patentansprüche

1. Statorstufe (1) eines Kompressors einer Turbomaschine eines Luftfahrzeugs, umfassend:
- eine ringförmige innere Halterung (2), umfassend mindestens ein aus einem Verbundmaterial bestehendes Segment (21);
- eine ringförmige äußere Halterung, die die innere Halterung (2) umgibt;
- eine Vielzahl von Statorschaufeln (3), die sich radial von der inneren Halterung (2) zur äußeren Halterung erstrecken, wobei jede eine Druckseite zum Umleiten eines Luftstroms umfasst;
- mindestens eine Hilfsschaufel (4), die in einem kleineren Abstand von einer ersten (3B) der Statorschaufeln (3) angeordnet ist als von den anderen Statorschaufeln (3), umfassend eine Druckseite (41) mit einem kleineren Flächeninhalt als ein Flächeninhalt der Druckseite (31 B) der ersten Statorschaufel (3B);
**dadurch gekennzeichnet, dass** die mindestens eine Hilfsschaufel (4):
- einen mindestens teilweise im Verbundmaterial versenkten Fuß (42) umfasst; und
- sich ausgehend vom Fuß (42) parallel zu und vollständig zwischen der ersten Statorschaufel (3B) und einer zweiten (3A) der Statorschaufeln (3) radial erstreckt.

2. Statorstufe (1) nach dem vorstehenden Anspruch, **dadurch gekennzeichnet, dass** ein Querschnitt (44) der mindestens einen Hilfsschaufel (4) ein L-förmiges Profil aufweist.

3. Statorstufe (1) nach dem vorstehenden Anspruch, **dadurch gekennzeichnet, dass** der Querschnitt (44) des Fußes (42) ein L-förmiges Profil aufweist.

4. Statorstufe (1) nach einem der vorstehenden Ansprüche, **dadurch gekennzeichnet, dass** der Fuß (42) zwei im Wesentlichen ebene Sekantenabschnitte umfasst, umfassend einen ersten Abschnitt (42A), der die innere Halterung (2) radial durchquert, und einen zweiten Abschnitt (42B), der auf einer Innenfläche (22) der inneren Halterung (2) aufliegt.

5. Statorstufe (1) nach einem der vorstehenden Ansprüche, **dadurch gekennzeichnet, dass** die mindestens eine Hilfsschaufel (4) ein Metallblatt umfasst.

6. Statorstufe (1) nach einem der vorstehenden Ansprüche, **dadurch gekennzeichnet, dass** die mindestens eine Hilfsschaufel (4) ein aerodynamisches Profil aufweist.

7. Statorstufe (1) nach einem der vorstehenden Ansprüche, **dadurch gekennzeichnet, dass** die Statorstufe (1) eine Vielzahl von Hilfsschaufeln umfasst, darunter die mindestens eine Hilfsschaufel (4),
wobei jede der Hilfsschaufeln einen mindestens teilweise im Verbundmaterial versenkten Fuß umfasst und sich ausgehend von diesem Fuß ausgehend im Wesentlichen parallel zwischen zwei der Statorschaufeln (3) radial erstreckt.

8. Statorstufe (1) nach dem vorstehenden Anspruch, **dadurch gekennzeichnet, dass** jede der Hilfsschaufeln mit einer der Statorschaufeln verknüpft ist, die sich entlang einer Druckseite jeder der Hilfsschaufeln in einem Abstand (d) erstreckt, der zwischen 20% und 35% eines Abstands (D) zwischen den zwei Statorschaufeln beträgt.

9. Statorstufe (1) nach einem der zwei vorstehenden Ansprüche, **dadurch gekennzeichnet, dass** die Statorschaufeln (3) ähnliche Abmessungen und Profile besitzen und dadurch, dass die Hilfsschaufeln ähnliche Abmessungen und Profile besitzen und einen Querschnitt besitzen, der ein L-förmiges Profil aufweist.

10. Statorstufe (1) nach dem vorstehenden Anspruch, **dadurch gekennzeichnet, dass** eine Höhe (h) jeder der Hilfsschaufeln, radial gemessen, zwischen 5% und 40% einer Höhe (H) jeder der Statorschaufeln (3), radial gemessen, beträgt.

11. Statorstufe (1) nach einem der zwei vorstehenden Ansprüche, **dadurch gekennzeichnet, dass** eine Länge (I) jeder der Hilfsschaufeln, auf im Wesentlichen axiale Weise auf einer Außenfläche (23) der inneren Halterung (2) gemessen, zwischen 5% und 60% einer Länge (L) jeder der Statorschaufeln (3), auf im Wesentlichen axiale Weise auf der Außenfläche (23) der inneren Halterung (2) gemessen, beträgt.

12. Kompressor einer Turbomaschine eines Luftfahrzeugs, umfassend eine Statorstufe (1) nach einem der vorstehenden Ansprüche.

13. Turbomaschine eines Luftfahrzeugs, umfassend einen Kompressor nach dem vorstehenden Anspruch.

14. Verfahren zum Herstellen einer Statorstufe nach einem der Ansprüche 1 bis 11, umfassend die folgenden Schritte:
- Herstellen der mindestens einen Hilfsschaufel (4);
- Herstellen des mindestens einen Segments (21) ausgehend vom Verbundmaterial durch mindestens teilweise Versenken des Fußes (42) in das Verbundmaterial.

## Claims

1. Stator stage (1) of a compressor of an aircraft turbine engine comprising:
- an annular inner ferrule (2) comprising at least one segment (21) constituted of a composite material;
- an annular outer ferrule surrounding said inner ferrule (2);
- a plurality of stator blades (3) extending radially from said inner ferrule (2) to said outer ferrule, each comprising a pressure face to deviate an airflow;
- at least one auxiliary blade (4) disposed at a smaller distance from a first (3B) of said stator blades (3) than other stator blades (3), comprising a pressure face (41) of a smaller area than an area of the pressure face (31B) of said first stator blade (3B);
**characterised in that** said at least one auxiliary blade (4):
- comprises a root (42) at least partially buried in said composite material; and
- extends radially, from said root (42), parallel to and totally between said first stator blade (3B) and a second (3A) of said stator blades (3).

2. Stator stage (1) according to the preceding claim, **characterised in that** a cross-section (44) of said at least one auxiliary blade (4) has an L-shaped profile.

3. Stator stage (1) according to the preceding claim, **characterised in that** said cross-section (44) of said root (42) has an L-shaped profile.

4. Stator stage (1) according to any one of the preceding claims, **characterised in that** said root (42) comprises two substantially flat secant portions comprising a first portion (42A) radially passing through said inner ferrule (2), and a second portion (42B) pressing on an inner surface (22) of said inner ferrule (2).

5. Stator stage (1) according to any one of the preceding claims, **characterised in that** said at least one auxiliary blade (4) comprises a metal strip.

6. Stator stage (1) according to any one of the preceding claims, **characterised in that** said at least one auxiliary blade (4) has an aerodynamic profile.

7. Stator stage (1) according to any one of the preceding claims, **characterised in that** the stator stage (1) comprises a plurality of auxiliary blades, including said at least one auxiliary blade (4),
each of said auxiliary blades comprising a root at least partially buried in said composite material, and extending radially, from this root, mainly parallel between two of said stator blades (3).

8. Stator stage (1) according to the preceding claim, **characterised in that** said each of said auxiliary blades is associated with one of said stator blades extending along a pressure face of said each of said auxiliary blades, at a distance (d) of between 20% and 35% of a distance (D) between said two stator blades.

9. Stator stage (1) according to any one of the two preceding claims, **characterised in that** said stator blades (3) are of similar dimensions and profiles, and **in that** said auxiliary blades are of similar dimensions and profiles, and have a cross-section having an L-shaped profile.

10. Stator stage (1) according to the preceding claim, **characterised in that** a height (h) of said each of said auxiliary blades, measured radially, is of between 5% and 40% of a height (H) of each of said stator blades (3), measured radially.

11. Stator stage (1) according to any one of the two preceding claims, **characterised in that** a length (l) of said each of said auxiliary blades, measured mainly axially on an outer surface (23) of said inner ferrule (2), is of between 5% and 60% of a length (L) of each of said stator blades (3), measured mainly axially on said outer surface (23) of said inner ferrule (2).

12. Compressor of an aircraft turbine engine comprising a stator stage (1) according to any one of the preceding claims.

13. Aircraft turbine engine comprising a compressor according to the preceding claim.

14. Method for manufacturing a stator stage according to any one of claims 1 to 11, comprising the following steps:
- manufacturing said at least one auxiliary blade (4);
- manufacturing said at least one segment (21) from said composite material by at least partially burying said root (42) in said composite material.
